Europäisches Patentamt

(19) European Patent Office

Office européen des brevets

(11) Numéro de publication: **0 149 873**
**A2**

(12) **DEMANDE DE BREVET EUROPEEN**

(21) Numéro de dépôt: **84201947.3**

(22) Date de dépôt: **28.12.84**

(51) Int. Cl.⁴: **H 02 P 1/28**

(30) Priorité: **23.01.84 FR 8401097**

(43) Date de publication de la demande:
**31.07.85 Bulletin 85/31**

(84) Etats contractants désignés:
**AT BE CH DE GB IT LI LU NL SE**

(71) Demandeur: **LOUIS BARRERE et Cie S.A.**
**Zone Industrielle Route de Paris**
**F-31790 Saint-Jory(FR)**

(72) Inventeur: **Terrier, André**
**119 avenue de Fronton**
**F-31200 Toulouse(FR)**

(74) Mandataire: **Barre, Philippe**
**Cabinet Barre-Gatti-Laforgue 95 rue des Amidonniers**
**F-31069 Toulouse Cédex(FR)**

(54) **Dispositif pour le demarrage d'un moteur electrique asynchrone.**

(57) L'invention concerne un dispositif pour le démarrage d'un moteur électrique asynchrone du type possédant un enroulement statorique par phase et un rotor de faible impédance. Le dispositif visé par l'invention comprend, par phase, une paire de thyristors agencés tête-bêche (2) et un circuit d'amorçage de ces derniers. Ce circuit d'amorçage est essentiellement composé d'un générateur de rampe (5) adapté pour délivrer un signal de rampe d'amplitude croissante avec le temps, de façon à autoriser une mise en conduction progressive des thyristors (2) fonction de l'amplitude dudit signal de rampe.

./...

EP 0 149 873 A2

Fig. 1

1

# DISPOSITIF POUR LE DEMARRAGE D'UN MOTEUR ELECTRIQUE ASYNCHRONE

L'invention concerne un dispositif pour le démarrage d'un moteur électrique asynchrone du type possédant un enroulement statorique par phase et un rotor de faible impédance ; elle s'applique tout particulièrement mais non exclusivement pour assurer le démarrage des moteurs asynchrones triphasés.

On sait que le démarrage des moteurs du type précité provoque un appel de courant très élevé, dont l'intensité est plusieurs fois supérieure à l'intensité nominale du moteur en régime normal ; ces surintensités de démarrage peuvent s'élever jusqu'à sept ou huit fois l'intensité nominale.

Pour limiter ces surintensités, il est connu de disposer en série entre l'alimentation électrique et les enroulements statoriques, des paires de thyristors agencés tête-bêche, qui sont équivalentes à des impédances variables et sont commandées de façon à limiter le courant de démarrage qui les traverse ; en fin de démarrage, ces paires de thyristors sont court-circuitées afin d'alimenter directement le moteur. La commande des paires de thyristors (qui agit sur la gachette de chacun de ceux-ci) est actuellement réalisée par l'entremise de transformateurs d'intensité, de façon à limiter l'intensité de démarrage à une valeur affichée : cette intensité croît brusquement lors de la mise sous-tension et présente ensuite une allure en dents de scie autour de la valeur affichée. On pourra par exemple se reporter au brevet FR 2 442 541 qui décrit un système de démarrage de ce type.

Toutefois, ces systèmes présentent plusieurs inconvénients. En premier lieu, la pointe instantanée d'intensité jusqu'à la valeur affichée provoque de très fortes accélérations du rotor, lequel est soumis pendant ce court instant à des contraintes mécaniques excédant très notablement les contraintes nominales en régime ; de plus ces accélérations peuvent produire des surcontraintes préjudiciables sur les organes entraînés par le rotor.

**0149878**

En outre, dans ces systèmes, la valeur affichée de l'intensité de démarrage est constante et prédéterminée (cette valeur affichée étant généralement de l'ordre de 1,8 fois l'intensité nominale). En cas de charge élevée sur le moteur, l'intensité de démarrage peut être insuffisante pour que le courant statorique permette un entraînement du rotor jusqu'à la vitesse nominale ; le rotor glisse alors fortement par rapport à la vitesse de rotation magnétique et atteint une vitesse limite inférieure à sa vitesse nominale. Les constructeurs sont donc soumis à deux exigences contraires : d'une part, prévoir une valeur affichée aussi faible que possible afin de réduire les surintensités de démarrage, d'autre part, éviter les phénomènes de glissement ci-dessus évoqués pendant la période démarrage sous peine de susciter des surintensités après mise en court-circuit des thyristors (puisqu'en fait le démarrage du rotor se poursuivra ensuite sans régulation de courant).

De plus, dans les systèmes connus, la mise en court-circuit des thyristors est temporisée et, en cas de mauvais réglage, le court-circuit des thyristors peut s'effectuer trop tôt (même en l'absence de glissement du rotor), ce qui conduit ensuite à des surintensités de courant pour les raisons déjà évoquées.

Par ailleurs, dans les systèmes triphasés du type sus-évoqué, le déclenchement des commandes des thyristors est effectué à partir d'une référence artificielle constituée par le point neutre d'un montage en étoile sur les trois phases (voir le brevet FR déjà évoqué) ; ce point neutre se déplace en fonction de la charge relative des trois circuits de phase, de sorte que le pilotage des thyristors subit des décalages par rapport à la loi théorique (prévue pour des phases équilibrées) ; des surintensités par rapport à la valeur théorique affichée ou des sous-intensités avec risque de glissement du rotor peuvent ainsi apparaître au cours de la période de démarrage.

La présente invention se propose de fournir un dispositif perfectionné pour le démarrage des moteurs électriques asynchrones, du type sus-évoqué, comprenant des paires de thyristors agencés tête-bêche ; elle vise à supprimer les défauts précités des systèmes connus de ce type.

Un objectif de l'invention est en particulier d'assurer un démarrage progressif du moteur de façon à réduire les surcontraintes que subit le rotor ou les organes entraînés au cours du démarrage.

Un autre objectif est d'assurer une limitation optimale du courant de démarrage, sans risque de glissement important du rotor, quelle que soit la charge du moteur dans la plage des valeurs admissibles.

Un autre objectif est de supprimer les risques d'apparition de surintensités après la phase de démarrage (la phase de démarrage étant définie comme la période séparant l'instant où le dispositif est mis sous tension, et l'instant où les thyristors sont court-circuités).

A cet effet, le dispositif visé par l'invention pour le démarrage d'un moteur électrique asynchrone possédant un enroulement statorique par phase et un rotor de faible impédance est du type comprenant, par phase, une borne d'entrée destinée à être connectée à une alimentation électrique alternative, une borne de sortie destinée à être connectée à un enroulement statorique du moteur, une ligne de puissance reliant ladite borne d'entrée et ladite borne de sortie et comportant, en série, un contacteur manoeuvrable et une paire de thyristors agencés tête-bêche, une ligne de court-circuit agencée en parallèle de chaque paire de thyristors et dotée d'un contacteur de mise en court-circuit de ladite paire en fin de démarrage et un circuit d'amorçage des thyristors connecté aux gachettes de ces derniers ; selon la présente invention, le circuit d'amorçage des thyristors comprend un générateur de rampe, adapté pour délivrer un signal électrique, dit signal de rampe, d'amplitude croissante avec le temps, ledit générateur de rampe étant associé à des moyens de déclenchement apte à engendrer sa mise en service à partir de la fermeture du contacteur manoeuvrable et étant agencé dans ledit circuit d'amorçage de façon à autoriser une mise en conduction progressive des thyristors fonction de l'amplitude du signal de rampe issu dudit générateur.

Ainsi, comme on le comprendra mieux plus loin, au cours de la phase de démarrage, l'intensité de démarrage est d'abord amenée à croître progressivement, le long d'une courbe définie par le générateur de rampe, depuis une valeur nulle jusqu'à une valeur limite (non figée), puis, à l'approche de la vitesse nominale de rotation, cette intensité décroît rapidement jusqu'à sa valeur nominale de régime en raison de la diminution de l'appel de courant à l'approche de cette vitesse. La croissance progressive précitée peut être ajustée par le générateur de rampe de façon à être linéaire ou sensiblement linéaire avec une pente adaptée pour limiter les accélérations subies par le rotor et les organes entraînés. De plus, pour un moteur de caractéristiques données, la pente de la courbe de croissance peut être ajustée de sorte que la valeur limite à partir de laquelle l'intensité du courant, quittant la courbe précitée, décroît rapidement vers l'intensité nominale, soit relativement réduite pour les charges habituelles appliquées au rotor (notamment 1,6 à 2 fois l'intensité nominale) ; en cas de surcharge exceptionnelle, la chute d'intensité se produit plus tard à partir d'une intensité limite supérieure, mais le démarrage du rotor est assuré pendant la phase de démarrage sans glissement excessif et ce, jusqu'à la vitesse nominale : le caractère non figé de la valeur limite garantit le démarrage effectif jusqu'à la vitesse nominale pendant la phase de démarrage et permet de supprimer tout risque de surintensité après ladite phase.

Le signal de rampe peut en particulier être généré en utilisant, dans un circuit RC alimenté à courant constant, la charge d'un condensateur, qui croît linéairement d'une valeur nulle jusqu'à un palier correspondant à la charge maximale dudit condensateur.

Conformément à l'invention, la caractéristique du circuit RC précité est avantageusement ajustée de sorte que la charge maximale de son condensateur soit très supérieure à la valeur limite correspondant à une mise en conduction totale des thyristors. Ainsi, pendant toute la phase de démarrage, le régime du moteur (c'est-à-dire la vitesse de rotation de son rotor) croît de façon progressive et contrôlée jusqu'au régime nominal.

De plus, selon une autre caractéristique de l'invention, le contacteur de mise en court-circuit des thyristors est associé à un circuit de commande qui reçoit le signal de rampe issu du circuit RC et qui est adapté pour provoquer la fermeture dudit contacteur lorsque ce signal de rampe atteint le palier précité (correspondant à la charge maximale du condensateur du circuit RC). Ainsi, le contacteur de mise en court-circuit est asservi, non pas à un paramètre temporel comme dans les dispositifs connus, mais à la valeur de palier du signal de rampe ; de telles dispositions garantissent un démarrage effectif du moteur jusqu'à la vitesse nominale, avant court-circuitage des thyristors, et ce, quel que soit le réglage de la pente du signal de rampe (et donc quel que soit le temps nécessaire pour atteindre la valeur de palier précité).

L'invention s'applique tout particulièrement pour assurer le démarrage des moteurs triphasés. De façon connue en soi, le circuit d'amorçage comprend, alors, un circuit de détection d'informations de phases, délivrant sur trois sorties des impulsions correspondant aux passages à zéro de chacune des trois phases. Ces impulsions pilotent des logiques de commande des trois paires de thyristors montées sur les trois phases ; chacune desdites logiques de commande reçoit le signal de rampe ainsi qu'un signal oscillant généré par un oscillateur et délivre à chaque passage à zéro de la phase concernée un train d'impulsions de largeur proportionnelle à l'amplitude dudit signal de rampe, de façon à engendrer une mise en conduction progressive de la paire de thyristors correspondante.

Selon une caractéristique de l'invention, ledit circuit de détection d'informations de phases comprend trois ponts redresseurs montés en triangle par rapport aux trois phases, de façon à générer trois références équilibrées quelles que soient les charges relatives des trois phases (du fait que, dans ce montage, les tensions composées sont toujours en phase avec les tensions simples).

D'autres caractéristiques de l'invention se dégageront de la description qui suit en référence aux dessins annexés qui en présentent à titre d'exemple non limitatif un mode de réalisation ; sur ces dessins :

- la figure 1 présente un schéma d'ensemble d'un dispositif conforme à l'invention pour le démarrage d'un moteur asynchrone triphasé,

- la figure 2 est un schéma électrique d'un des circuits de ce dispositif (circuit de détection d'informations de phases),

- la figure 3 est un schéma électrique des logiques de commande situées en aval du circuit de détection représenté à la figure 2,

- la figure 4 est un schéma électrique, montrant un circuit d'attaque d'une paire de thyristors, monté pour chaque phase en aval d'une logique de commande,

- les figures 5a, 5b, 5c, 5d et 5e illustrent la forme des signaux è la sortie des principaux ensembles du dispositif,

- la figure 6 fournit des exemples de courbes de démarrage, obtenues au moyen du dispositif de l'invention.

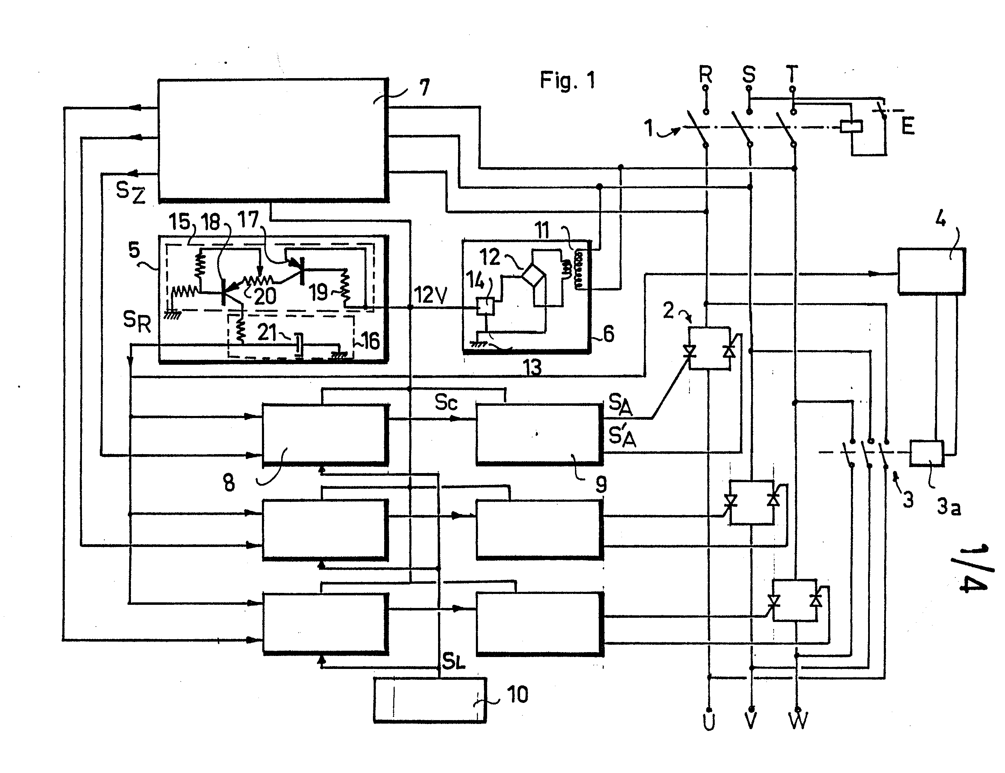

Le dispositif de démarrage représenté à titre d'exemple à la figure 1 est appelé à être branché par trois bornes d'entrée R, S, T, sur les trois phases d'une alimentation électrique triphasée ; ce dispositif comprend trois bornes de sortie U, V, W, auxquelles sont destinés à être connectés les trois enroulements statoriques du moteur triphasé.

Les bornes d'entrée R, S, T et de sortie U, V, W, sont deux à deux reliées par des lignes de puissance comportant chacune, en série, un contacteur 1 et une paire de thyristors agencés tête-bêche telle que 2. Le contacteur 1 est manoeuvrable, par l'entremise d'une bobine et d'un interrupteur manuel E.

Chaque paire de thyristors 2 est court-circuitée par une ligne montée en parallèle qui est pourvue d'un contacteur 3 dit contacteur de mise en court-circuit ; ce contacteur 3 est associé à une bobine symbolisée en 3a, qui reçoit un signal d'ouverture ou fermeture de la part d'un circuit 4, dit circuit de commande du contacteur 3.

Les gachettes des six thyristors sont connectées à un circuit d'amorçage qui est décrit ci-après et a pour fonction d'engendrer une mise en conduction progressive

7    0149873

des thyristors à partir de l'instant de fermeture du contacteur 1.

Ce circuit d'amorçage comprend un générateur de rampe 5 qui est alimenté par un ensemble de conversion 6, délivrant à sa sortie une basse tension continue stabilisée lorsque le contacteur 1 est fermé.

L'ensemble de conversion 6 est monté en parallèle, entre deux phases, à la sortie du contacteur 1. Un exemple de réalisation de cet ensemble est illustré à la figure 1 ; en l'exemple, cet ensemble comprend un transformateur 11 dont le primaire est relié aux phases S et T et dont le secondaire est relié à la diagonale alternative d'un pont de "Gretz" 12. L'autre diagonale de ce pont est connectée, d'une part, à une ligne 13 constituant la référence de tension (conventionnellement tension zéro), d'autre part, à un filtre 14 de stabilisation de type classique.

Cet ensemble est connu en lui-même et délivre une tension stabilisée qui, en l'exemple, est ajustée à une valeur de l'ordre de 12 volts.

Le générateur de rampe 5 comprend un générateur de courant constant 15 alimenté en 12 volts par l'ensemble de conversion 6 et un circuit RC 16 relié au générateur 15.

Le générateur de courant constant 15 est réalisé de façon connue en soi au moyen de deux transistors PNP 17 et 18 associés à des résistances telles que 19 ; ces composants sont agencés de sorte que le courant de sortie sur l'émetteur du dernier transistor 18 présente une intensité constante. Une des résistances 20 reliant l'émetteur du premier transistor 17 au collecteur du second 18 est une résistance ajustable en vue d'autoriser un réglage de la valeur de l'intensité  en sortie du générateur de courant.

Le circuit RC 16 comprend de façon classique un condensateur polarisé 21 et une résistance montée en série.

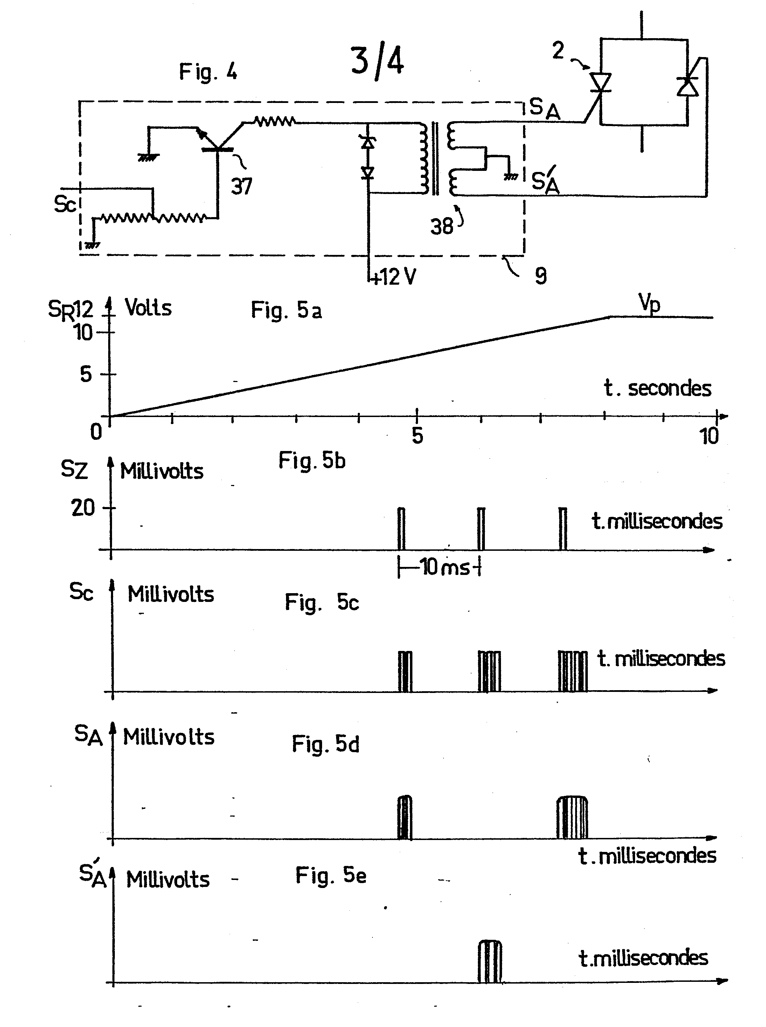

Ainsi, le générateur de rampe 5 génère, à sa sortie, à partir de l'instant de fermeture du contacteur 1, un signal de rampe SR constitué par une tension croissant linéairement jusqu'à un palier $V_p$ comme l'illustre la figure 5a. La valeur du palier $V_p$ est fonction de la caractéristique du circuit RC (capacité du condensateur 21) ; on verra que cette dernière est ajustée pour correspondre à des signaux d'attaque (SA, S'A) des thyristors très supérieurs à ceux nécessaires à une mise en conduction totale desdits thyristors. La pente du signal de rampe SR peut être réglée en fonction des caractéristiques du moteur grâce à la résistance ajustable 20. Il est à noter que des modifications de cette pente ne changent pas la valeur du palier $V_p$.

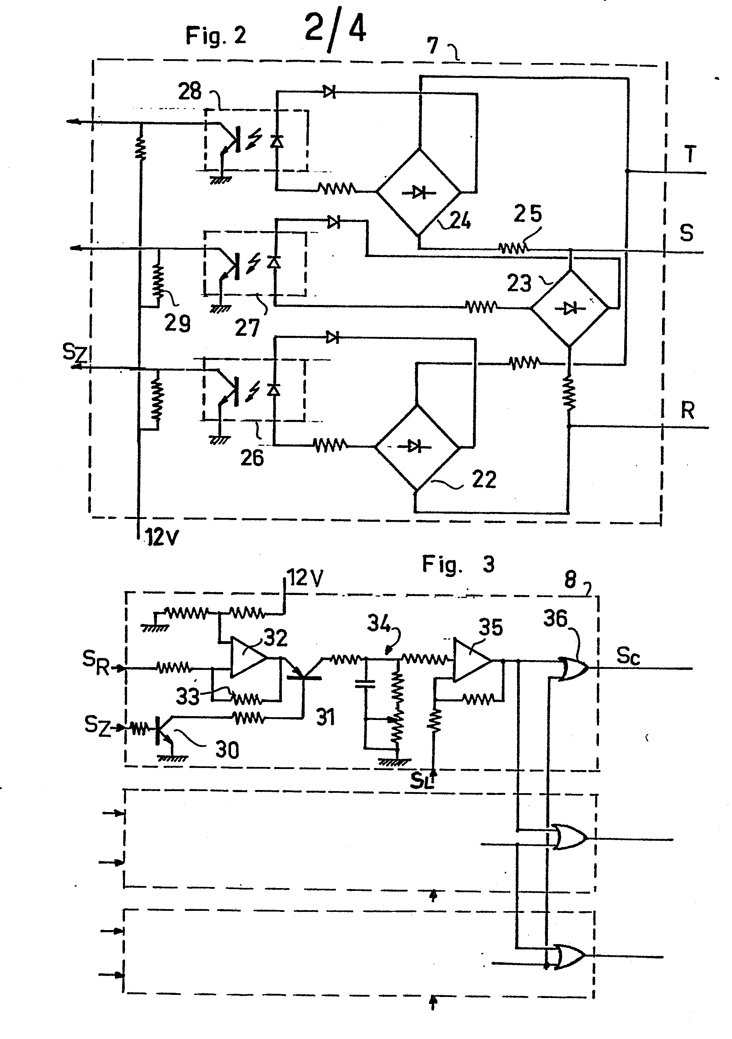

Par ailleurs, le circuit d'amorçage comprend un circuit 7 de détection d'informations de phases. Ce circuit dont un exemple préférentiel est schématisé à la figure 2 est connecté sur les trois phases R, S, T, à la sortie du contacteur 1.

Comme l'illustre la figure 2, ce circuit comprend trois ponts de Gretz 22, 23 et 24 montés en triangle par rapport aux trois phases ; les diagonales d'entrée de ces ponts sont reliées aux trois phases par l'intermédiaire de résistances chutrices de tension telles que 25, adaptées pour conférer au circuit une impédance appropriée de façon à obtenir une basse tension sur l'autre diagonale desdits ponts. Ces dernières diagonales alimentent trois photocoupleurs 26, 27, 28 qui retransmettent les signaux avec une isolation parfaite du circuit.

Les sorties des photocoupleurs sont reliées à un réseau de résistances telles que 29, destinées à limiter le courant collecteur/émetteur des transistors de sortie des photocoupleurs.

Ainsi, le signal SZ délivré sur chacune des trois sorties du circuit de détection 7 est constitué par des impulsions à chaque passage à zéro de la phase correspondante, comme l'illustre la figure 5b.

Par ailleurs, le circuit d'amorçage comprend, pour chaque phase, une logique de commande telle que 8, suivie par un circuit 9 d'attaque des gâchettes de chaque paire de thyristors.

Chaque logique de commande 8 reçoit le signal de rampe SR, le signal de passage à zéro SZ de la phase correspondante et un signal oscillant SL issu d'un oscillateur 10. En outre, les logiques 8 sont reliées à la sortie de l'ensemble 6 en vue de leur alimentation basse tension.

Un exemple de logiques 8 est schématisé à la figure 3.

En cet exemple, chacune desdites logiques comprend un transistor de commutation NPN 30 sur la base duquel arrivent les impulsions SZ de passage à zéro de la phase considérée. Ce transistor génère une inversion desdites impulsions et alimente la base d'un autre transistor de commutation PNP 31.

Par ailleurs, le signal de rampe SR est traité, à son arrivée dans le circuit logique 8, par un amplificateur 32 associé à un réseau de résistance de polarisation 33.

Le signal de rampe ainsi traité est délivré vers le collecteur du transistor 31 qui délivre ainsi, sur son émetteur, des impulsions de largeur proportionnelle à l'amplitude du signal SR aux instants d'apparition des impulsions SZ.

L'émetteur du transistor 31 est relié à un circuit RC 34 permettant d'ajuster l'amplitude des impulsions précitées ; ceci permet dans les trois circuits logiques 8, d'obtenir des impulsions de même amplitude ; le réglage s'effectue dans chaque logique par l'intermédiaire d'une résistance ajustable que comporte le circuit 34.

Les impulsions issues du circuit 34 sont délivrées à l'entrée d'un comparateur 35 qui reçoit par ailleurs sur une autre entrée le signal oscillant SL issu de l'oscillateur 10. A la sortie du comparateur 35, apparaissent des trains d'impulsions : les impulsions de chaque train se succèdent à fréquence de l'oscillateur 10 (en particulier 2 kilohertz), la longueur de chaque train étant proportionnelle à la largeur des impulsions issues du circuit RC 34.

Un système de portes OU 36 reçoit les trains d'impulsions issus des trois comparateurs 35 des trois logiques 8 en vue de les combiner deux-à-deux, de façon à obtenir, à la sortie de chaque logique, un signal Sc constitué par des trains d'impulsions décalés de 120°. Les connections des portes OU sont réalisées comme l'illustre la figure 3 de façon que les trains d'impulsions des trois signaux Sc apparaissant à la sortie des trois logiques soient décalés dans le même sens. La figure 5c illustre l'allure d'un signal Sc : la distance entre deux trains d'impulsions est de 1/6 de période (environ 10 millisecondes).

Les signaux Sc sont délivrés vers les circuits d'attaque 9 qui envoient vers les gâchettes des paires de thyristors 2 des signaux d'amorçage SA, S'A compatibles avec la commande desdits thyristors. Ces signaux d'amorçage permettent de conférer aux thyristors une impédance équivalente inversement proportionnelle à l'amplitude du signal de rampe SR.

Chaque circuit d'attaque 9 est en lui-même classique et comprend, ainsi que l'illustre la figure 4, un transistor d'amplification 37 et un transformateur d'impulsions 38 à double secondaire, délivrant vers les gâchettes des deux thyristors de la paire 2 considérée des signaux SA et S'A ayant l'allure schématisée aux figures 5d et 5e.

Par ailleurs, le circuit 4 de commande du contacteur 3 est constitué par un relais qui reçoit le signal de rampe SR issu du générateur de rampe 5 et est adapté pour provoquer la fermeture du contacteur 3 lorsque ce signal de rampe atteint le palier $V_p$ précité (correspondant à la charge maximale du condensateur 21 du circuit RC 16).

Comme déjà indiqué, la charge maximale de condensateur est très supérieure (par exemple 1,3 fois plus grande) à la valeur limite nécessaire pour engendrer à la sortie du circuit d'amorçage des signaux d'amorçage SA, S'A aptes à provoquer la mise en conduction totale des thyristors. Ainsi, la mise en court-circuit des thyristors 2 s'effectue toujours après mise en conduction totale de ceux-ci, c'est-à-dire après le démarrage effectif du moteur.

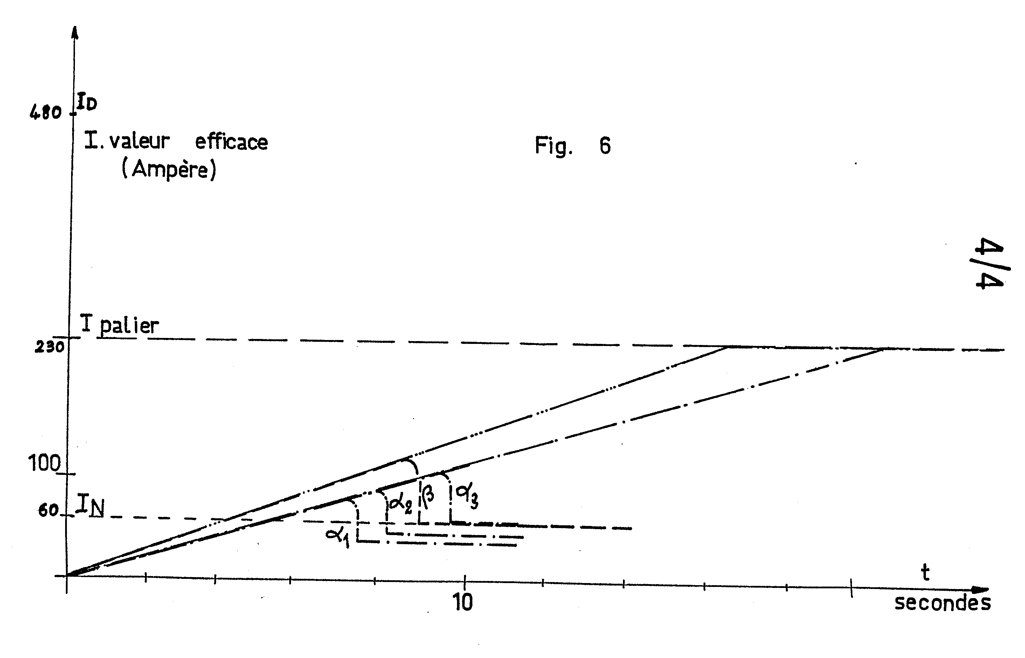

La figure 6 illustre l'allure de plusieurs courbes de démarrage de moteurs ; ces courbes donnent en fonction du temps la valeur efficace de l'intensité du courant traversant un des enroulements statoriques du moteur au cours du démarrage.

Les courbes $\alpha_1$, $\alpha_2$, et $\alpha_3$ correspondent aux démarrages d'un moteur, respectivement à vide ($\alpha_1$), à demi-charge ($\alpha_2$) et à pleine charge ($\alpha_3$). En l'exemple,

0149873

la caractéristique $\frac{Id}{IN}$ du moteur était de l'ordre de 8 et sa puissance de l'ordre de 40 chevaux (Id : courant appelé au démarrage en l'absence de tout dispositif de démarrage ; IN : courant nominal à régime normal en pleine charge).

Le circuit RC 16 du dispositif de démarrage possède une caractéristique ajustée de façon que le palier $V_p$ du signal de rampe SR corresponde à une intensité théorique dans chaque enroulement statorique très supérieure à IN, en l'exemple de l'ordre de 4 IN (de façon à assurer le démarrage effectif dans tous les cas bien avant d'atteindre ce palier).

Les courbes $\alpha_1$, $\alpha_2$, et $\alpha_3$ ont une pente de montée identique, qui est réglée par la valeur de la résistance ajustable 20 en vue d'obtenir, en fonction du moteur, les paramètres optima (intensité de démarrage, temps de démarrage).

Chaque courbe d'intensité subit une décroissance brusque lorsque le moteur a atteint son régime nominal. On constate sur les trois courbes que le point de décroissance est légèrement décalé en fonction de la charge (l'intensité de démarrage étant plus grande pour la pleine charge).

La courbe $\beta$ est une courbe de démarrage du même moteur à pleine charge, en modifiant la valeur de la résistance ajustable 20 du circuit de rampe (la caractéristique du circuit RC 16 demeurant identique). En l'exemple représenté, le moteur démarre plus vite mais avec une intensité de démarrage supérieure à celle de la courbe $\alpha_3$. Il est à noter que les essais ont permis de constater qu'il existe une durée de démarrage optimum correspondant à une intensité de démarrage minimale ; de part et d'autre de ce point (durée plus courte ou plus longue), l'intensité de démarrage observée est plus élevée. En pratique, la valeur de la résistance ajustable 20 sera réglée de façon à se placer au voisinage de ce point optimum.

**0149873**

REVENDICATIONS

1/ - Dispositif pour le démarrage d'un moteur électrique asynchrone du type possédant un enroulement statorique par phase et un rotor de faible impédance, ce dispositif comprenant, par phase, une borne d'entrée (R, S, T) destinée à être connectée à une alimentation électrique alternative, une borne de sortie (U, V, W) destinée à être connectée à un enroulement statorique du moteur, une ligne de puissance reliant ladite borne d'entrée et ladite borne de sortie et comportant, en série, un contacteur manoeuvrable (1) et une paire de thyristors agencés tête-bêche (2), une ligne de court-circuit agencée en parallèle de chaque paire de thyristors (2) et dotée d'un contacteur (3) de mise en court-circuit de ladite paire en fin de démarrage, et un circuit d'amorçage des thyristors connecté aux gachettes de ces derniers, ledit dispositif étant caractérisé en ce que son circuit d'amorçage comprend un générateur de rampe (5), adapté pour délivrer un signal électrique, dit signal de rampe (SR), d'amplitude croissante avec le temps, ledit générateur de rampe étant associé à des moyens de mise sous tension (6) aptes à engendrer sa mise en service à partir de la fermeture du contacteur manoeuvrable (1) et étant agencé dans ledit circuit d'amorçage de façon à autoriser une mise en conduction progressive des thyristors fonction de l'amplitude du signal de rampe (SR) issu dudit générateur (5).

2/ - Dispositif selon la revendication 1, caractérisé en ce que :

. les moyens de mise sous tension du générateur de rampe comprennent un ensemble de conversion (6), monté en parallèle à la sortie du contacteur manoeuvrable (1) et adapté pour transformer la tension d'alimentation alternative en une basse tension continue stabilisée,

. le générateur de rampe (5) comprend, d'une part, un générateur de courant constant (15) alimenté par l'ensemble de conversion (6) précité, d'autre part, un circuit RC (16) relié au générateur de courant constant et adapté pour délivrer un signal de rampe (SR) constitué par une tension croissant avec la charge d'un condensateur (21) dudit circuit RC, jusqu'à un palier correspondant à la charge maximale dudit condensateur.

3/ - Dispositif selon la revendication 2, caractérisé en ce que le circuit RC (16) possède une caractéristique telle que la charge maximale de son condensateur soit supérieure à la valeur limite nécessaire pour engendrer, à la sortie du circuit d'amorçage, des signaux d'amorçage aptes à provoquer la mise en conduction totale des thyristors.

4/ - Dispositif selon l'une des revendications 2 ou 3, caractérisé en ce que le générateur de courant constant (15) comprend une résistance ajustable (20) agencée pour autoriser un réglage de l'intensité du courant continu basse tension généré, en vue de permettre un réglage de la pente de croissance de la tension issue du circuit RC (16).

5/ - Dispositif selon la revendication 3, caractérisé en ce que le contacteur (3) de mise en court-circuit des thyristors est associé à un circuit de commande (4), recevant le signal de rampe (SR) issu du circuit RC (16 ) et adapté pour provoquer la fermeture dudit contacteur lorsque le signal de rampe atteint le palier précité correspondant à la charge maximale du condensateur (21) du circuit RC.

6/ - Dispositif selon l'une des revendications 1, 2, 3, 4 ou 5, dans lequel, en aval du générateur de rampe (5), le circuit d'amorçage comprend par phase :

- une logique de commande (8) recevant le signal de rampe (SR) et adaptée pour délivrer des trains d'impulsions (Sc) de largeur proportionnelle à l'amplitude dudit signal de rampe,

- un circuit (9) d'attaque des gachettes de chaque paire de thyristors (2), ayant une entrée reliée à la logique de commande (8) et adapté pour délivrer des signaux d'amorçage des thyristors (SA, S'A) aptes à conférer à ces derniers une impédance équivalente inversement proportionnelle à l'amplitude du signal de rampe (SR).

7/ - Dispositif selon l'une des revendications 1, 2, 3, 4, 5 ou 6, destiné à assurer le démarrage d'un moteur triphasé, dans lequel le circuit d'amorçage comprend un circuit (7) de détection d'informations de phases, pourvu de trois ponts redresseurs (22, 23, 24) alimentés par les trois phases et de trois photocoupleurs (26, 27, 28) agencés en aval de chaque pont

**0149873**

redresseur en vue de délivrer, sur trois sorties, des impulsions (SZ) correspondant aux passages à zéro de chacune des trois phases, ledit dispositif étant caractérisé en ce que les trois ponts redresseurs (22, 23, 24) sont montés en triangle par rapport aux trois phases.

8/ - Dispositif selon les revendications 6 et 7 prises ensemble, caractérisé en ce qu'il comprend un oscillateur (10) délivrant vers les logiques de commande (8), un signal oscillant à fréquence fixe (SL), chacune desdites logiques de commande comprenant un système de comparateur (35) et portes logiques (36) recevant un signal image du signal de rampe (SR), des impulsions images des impulsions (SZ) de passage à zéro de la phase concernée et le signal oscillant (SL) issu de l'oscillateur et adapté pour délivrer, à chaque passage à zéro, un train d'impulsions (Sc) de largeur proportionnelle à l'amplitude du signal de rampe (SR).

Fig. 1

**0149873**

**2/4**

Fig. 2

Fig. 3

0149873

Fig. 4

3/4

Fig. 5a

Fig. 5b

Fig. 5c

Fig. 5d

Fig. 5e

I. valeur efficace (Ampère)

Fig. 6

4/4

0149873